# EUROPÄISCHE PATENTANMELDUNG

(11) **EP 2 784 489 A2**
(43) Veröffentlichungstag der Anmeldung: **01.10.2014**
(21) Anmeldenummer: 14162410.6
(22) Anmeldetag: 28.03.2014
(51) Int. Cl.: G01N 21/90, B67B 3/26

(54) **Vorrichtung zur Inspektion von Dichtungen von Bügelverschlüssen von Bügelverschlussflaschen**

(30) Priorität: 28.03.2013 DE 202013101360 U
(71) Anmelder: KS CONTROL Schneider/Ruhland GmbH, 93098 Mintraching (DE)
(72) Erfinder: Joachim Schneider, 93073 Neutraubling (DE)
(74) Vertreter: Graf Glück Kritzenberger

(57) **Zusammenfassung**

Die Erfindung betrifft eine Vorrichtung zur Inspektion von Dichtungen (3) von Bügelverschlüssen (2) von Bügelverschlussflaschen (1) umfassend eine Transportvorrichtung (4) zum Transport der Bügelverschlussflaschen (1) in zumindest einer Förderrichtung (FR), zumindest einer Inspektionsvorrichtung (9) zur Inspektion der an einem Verschlusstopfen (2.2) des Bügelverschlusses (2) vorgesehenen Dichtung (2) und zumindest eine Positioniervorrichtung (6) mit Mittel zum Drehen der Bügelverschlussflasche (1) um deren Flaschenlängsachse (LA) und Mittel zum Ausrichten des Bügelverschlusses (2). Besonders vorteilhaft weisen die Mittel zum Ausrichten des Bügelverschlusses (2) zumindest eine Magnetisierungseinrichtung (7) auf, die zur Erzeugung einer auf den Bügelverschluss (2) der Bügelverschlussflasche (1) einwirkenden Magnetkraft (F) ausgebildet ist.

## Beschreibung

Die Erfindung betrifft eine Vorrichtung zur Inspektion von Dichtungen von Bügelverschlüssen von Bügelverschlussflaschen gemäß dem Oberbegriff des Patentanspruches 1.

Bügelverschlussflaschen erfreuen sich in jüngster Vergangenheit einer zunehmenden Beliebtheit. Derartige Bügelverschlussflaschen weisen einen Bügelverschluss bestehend aus einem mehrteiligen Verschlussbügel und einem von diesem aufgenommenen Verschlussstopfen mit einer Dichtung, insbesondere einem Dichtungsgummiring. Der Verschlussstopfen ist hierbei drehgelenkig um eine senkrecht zur Flaschenlängsachse der Bügelverschlussflasche verlaufende Drehachse am mehrteiligen Verschlussbügel vorgesehen.

Der Verschlussbügel weist insbesondere einen Bügelring und einen Bügelarm auf, wobei die freien Enden des Bügelrings zur drehgelenkig Lagerung des Bügelrings im Mündungsbereich der Bügelverschlussflasche in zwei gegenüberliegenden Ausnehmungen aufgenommen sind. Der Bügelring bildet ferner eine Aufnahme für die freien Enden des Bügelarmes aus, und zwar sind diese in zwei ringartig ausgebildeten Bügelabschnitten des Bügelringes drehgelenkig aufgenommen. Der Bügelarm nimmt den Verschlussstopfen mit Dichtungsgummiring auf, und zwar ist hierzu ein gerader Bügelarmabschnitt durch eine längliche, quer durch den Verschlussstopfen verlaufende Bohrung geführt. Der Verschlussstopfen ist vorzugsweise aus einem keramischen Material hergestellt, wobei dessen unterer Stopfenabschnitt zur Aufnahme des Dichtungsgummiringes ausgebildet ist. Über den mehrteiligen, vorzugsweise aus Metall, insbesondere einem Metalldraht hergestellten Verschlussbügel wird der Verschlussstopfen mit dem Dichtungsgummiring auf die Öffnung der Flaschenmündung gepresst und damit ein luft- und flüssigkeitsdichter Verschluss der Flasche erreicht. Derartige Bügelverschlussflaschen sind vorzugsweise als Mehrwegflaschen ausgebildet. Vor einem erneuten Befüllen sind diese zu reinigen. Hierzu werden die leeren Bügelverschlussflaschen mit geöffnetem Bügelverschluss einer Flaschenreinigungsanlage zugeführt. Vor einem erneuten Befüllen ist eine Inspektion der Dichtung, insbesondere des Dichtungsgummiringes erforderlich, um eine Beschädigung dessen ausschließen zu können.

Aus dem Stand der Technik sind hierzu bereits unterschiedliche Vorrichtungen und Verfahren zur Inspektion von Dichtungen des Verschlussstopfens von derartigen Bügelverschlussflaschen bekannt geworden, beispielsweise aus der DE 10 2010 050 207 A1. Bei derartigen Vorrichtungen werden die Bügelverschlussflaschen mittels einer Transportvorrichtung einer Dreh- und/oder Positioniervorrichtung zugeführt und nach einer ggf. erforderlichen Ausrichtung der Bügelverschlussflaschen an eine Inspektionsvorrichtung befördert. Mittels mehrerer ortsfest montierter Führungselemente wird aufgrund der Transportbewegung der Bügelverschlussflaschen der Verschlussbügel einer Zwangsführung unterzogen. Hierzu wird der frei hängende Verschlussbügel durch ein mehrteiliges Führungselement entlang mehrer Führungsbahnen geführt und nach Erreichen einer vorgegebenen Inspektionsposition mittels der eine Beleuchtung und ein Kamerasystem aufweisenden Inspektionsvorrichtung untersucht. Nachteilig ist bei den bekannten Vorrichtungen das Aufgreifen des nach unten hängenden und an der Außenseite der Bügelverschlussflasche anliegenden Verschlussbügels mittels eines mechanischen Führungselementes, insbesondere bei nicht optimal ausgerichteten Bügelverschlussflaschen häufig fehlerhaft.

Ausgehend vom genannten Stand der Technik liegt der Erfindung die Aufgabe zugrunde, eine Vorrichtung zur Inspektion von Dichtungen von Bügelverschlüssen von Bügelverschlussflaschen aufzuzeigen, welche die vorgenannten Nachteile beseitigt, insbesondere eine kostengünstige, zuverlässige und wartungsarme Inspektion der Dichtungen an Verschlussstopfen von Bügelverschlussflaschen ermöglicht. Die Aufgabe wird durch eine Vorrichtung gemäß dem Patentanspruch 1 gelöst.

Der wesentliche Aspekt der erfindungsgemäßen Vorrichtung ist darin zu sehen, dass die Mittel zum Ausrichten des Bügelverschlusses zumindest eine Magnetisierungseinrichtung aufweisen, die zur Erzeugung einer auf den Bügelverschluss der Bügelverschlussflasche einwirkenden Magnetkraft ausgebildet. Besonders vorteilhaft wird durch die Magnetisierungseinrichtung ein Magnetfeld hoher Feldstärke erzeugt, welches eine Magnetkraft hervorruft, über welche der Verschlussbügel des Bügelverschlusses in Richtung der Magnetisierungsvorrichtung angezogen wird und somit von der Bügelverschlussflasche berührungslos abgehoben wird. Dadurch wird besonders effektiv eine Verkeimung des Verschlussstopfens bzw. der Dichtung verhindert.

Weiterhin vorteilhafit ist die erzeugte Magnetkraft zum Ausrichten des Bügelverschlusses entlang einer näherungsweise senkrecht zur Flaschenlängsachse verlaufenden Ebene ausgebildet. Hierdurch wird der Bügelverschluss in eine Halteposition überführt, in welcher dieser in Draufsicht näherungsweise senkrecht zur Förderrichtung orientiert ist.

In einer vorteilhaften Ausgestaltung der Erfindung ist eine Führungseinrichtung zum Drehen des am Bügelverschluss vorgesehenen Verschlusstopfens in eine Inspektionsposition zumindest abschnittsweise überlappend mit der Magnetisierungseinrichtung vorgesehen. Die Führungseinrichtung ist vorzugsweise durch eine Wendeleiste gebildet, über welche der Verschlussstopfen bei Förderung entlang der Förderrichtung um eine parallel zur Förderrichtung verlaufende Drehachse gedreht wird. Hierdurch wird der Verschlussstopfen bzw. die von diesem aufgenommen Dichtung in eine vorgegebene Inspektionsposition bewegt, und zwar wird der mit der Dichtung nach unten, d.h. in Richtung Transportebene weisende Verschlussstopfen mittels der Wendeleiste um vorzugsweise 180° gedreht, so dass die Dichtung nach oben orientiert ist und über darüber angeordnete Inspektionsvorrichtung erfasst werden kann. Die Wendeleiste weist in einer vorteilhaften Ausführungsvariante eine Vielzahl von entlang der Förderrichtung angeordneter magnetischer Elemente auf, die beispielsweise in der Wendeleiste aufgenommen bzw. integriert sind.

Weiterhin vorteilhaft sind die Mittel zum Drehen der Bügelverschlussflasche um deren Flaschenlängsachse durch zwei entlang der Transportvorrichtung angeordnete Riemenstationen gebildet, die einander gegenüber liegend angeordnet sind und deren Antriebsgeschwindigkeiten getrennt, d.h. unabhängig voneinander regelbar sind. Eine Riemenstation weist insbesondere zumindest eine Antriebsmotoreinheit und zumindest eine Umlenkrolleneinheit auf, zwischen denen zumindest ein Antriebsriemen gespannt ist. Durch entsprechen Regelung der Antriebsgeschwindigkeiten der Riemenstationen ist eine gesteuertes Drehen der in der Positioniervorrichtung aufgenommene Bügelverschlussflasche im Uhrzeigersinn oder im Gegenuhrzeigersinn um deren Flaschenlängsachse möglich, um eine vorgegebene Drehposition automatisiert anfahren zu können.

In einer vorteilhaften Ausführungsvariante sind die Mittel zum Drehen der Bügelverschlussflasche um deren Flaschenlängsachse durch zumindest eine Riemenstation und eine Förderschnecke gebildet, die entlang der Förderrichtung einander gegenüberliegend angeordnet sind. Vorzugsweise finden zumindest drei Riemenstation Verwendung, die entlang der Förderrichtung und parallel zur Förderschnecke vorgesehen sind. Diese überlappen abschnittsweise und sind hinsichtlich ihrer Antriebsgeschwindigkeiten unabhängig voneinander regelbar. In dieser Ausführungsvariante ist besonders vorteilhaft eine gleichzeitige Ausrichtung der Bügelverschlussflaschen während der Vorwärtsbewegung in Förderrichtung möglich, wodurch die Durchsatzraten erheblich gesteigert werden können.

In einer alternativen Ausführungsvariante sind die Mittel zum Drehen der Bügelverschlussflasche um deren Flaschenlängsachse durch eine schräge Anschlagfläche gebildet, der ein Abschnitt der Transportvorrichtung mit einer schiefen Transportebene zugeordnet ist. Die schräge Anlagefläche und die schiefe Transportebene schließen hierbei einen rechten Winkel ein, wobei die schiefe Transportebene der Transportvorrichtung mit der Horizontalen einen spitzen Winkel einschließt, und zwar vorzugsweise zwischen 10° und 45°. Vorteilhaft ist im Einlaufbereich der Positioniervorrichtung ein Teil der Transportvorrichtung mit einer schiefen Transportebene ausgebildet, so dass in Zusammenwirken mit der schrägen Anschlagfläche ein schwerkraftbedingtes Ausrichten/Drehen der Bügelverschlussflaschen derart erfolgt, dass deren Bügelverschlüsse in Richtung der schrägen Anschlagfläche orientiert sind.

In einer vorteilhaften Ausführung unter Einsatz der Riemenstationen ist einlaufseitig eine weitere Inspektionsvorrichtung zur Ermittlung der Drehposition der der Positioniervorrichtung zugeführten Bügelverschlussflasche bezogen auf die Förderrichtung vorgesehen ist. Abhängig von der ermittelten Drehposition werden die Antriebsgeschwindigkeiten der Riemenstationen geregelt, um eine Ausrichtung der Bügelverschlussflaschen in die jeweils vorgegebene Drehposition zu erreichen. Auslaufseitig ist die Inspektionsvorrichtung zur Inspektion der an einem Verschlusstopfen des Bügelverschlusses vorgesehenen Dichtung angeordnet ist.

Vorteilhaft ist die Magnetisierungseinrichtung durch einen Permanentmagneten oder einen Elektromagneten gebildet, wobei die von der Magnetisierungseinrichtung erzeugte Magnetkraft zwischen 1000 N und 3000 N beträgt.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht einer Bügelverschlussflasche,
- Fig. 2: eine schematische Draufsicht auf eine erfindungsgemäße Vorrichtung zur Inspektion von Bügelverschlussflaschen,
- Fig. 3: eine schematische Seitenansicht der erfindungsgemäße Vorrichtung zur Inspektion von Bügelverschlussflaschen gemäß Figur 2,
- Fig. 4: eine schematische Seitenansicht auf eine alternative Ausführungsvariante der Positionierungsvorrichtung der erfindungsgemäßen Vorrichtung zur Inspektion von Bügelverschlussflaschen und
- Fig. 5: eine schematische Draufsicht auf eine alternative Ausführungsvariante der erfindungsgemäßen Vorrichtung zur Inspektion von Bügelverschlussflaschen.

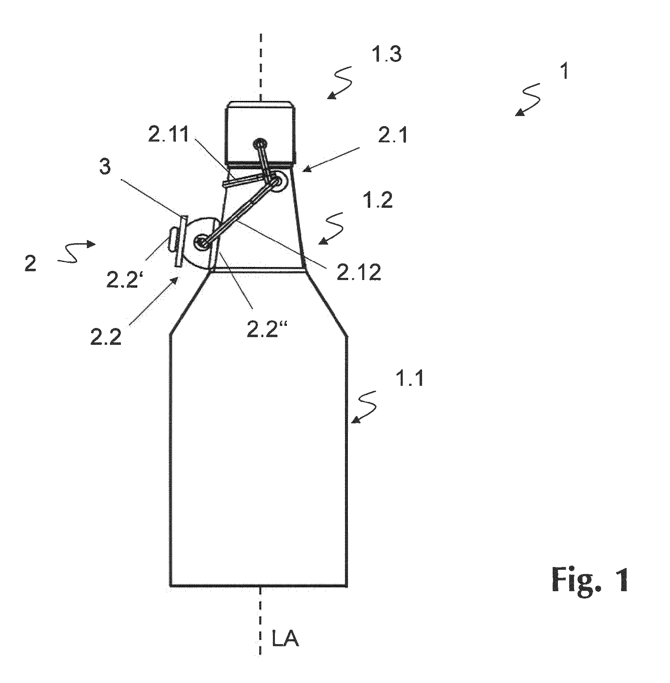

In Figur 1 ist beispielhaft eine Bügelverschlussflasche 1 in einer schematischen Seitenansicht dargestellt. Die Bügelverschlussflasche 1 besteht aus einem Flaschenkörper 1.1, einem Flaschenhals 1.2 und einer Flaschenmündung 1.3, wobei unterhalb der Flaschenmündung 1.3 ein Bügelverschluss 2 angeordnet ist, der sich im geöffneten Zustand in nach unten hängender Weise entlang dem Flaschenhals 1.2 erstreckt. Hierbei liegt der Bügelverschluss 2 an der Außenseite der Bügelverschlussflasche 1 an.

Der Bügelverschluss 2 umfasst einen mehrteiligen Verschlussbügel 2.1 aus Metall oder einer Metalllegierung und einem Verschlussstopfen 2.2, welcher mit einer Dichtung 3, vorzugsweise einem Dichtungsgummiring versehen ist. Der Verschlussbügel 2.1 weist einen Bügelring 2.1 und einen Bügelarm 2.12 zur drehbaren Halterung des Verschlussstopfens 2.2 auf. Die freien Enden des Bügelringes 2.11 sind zur drehgelenkigen Lagerung des Bügelverschlusses 2 im Bereich der Flaschenmündung 1.3 in zwei gegenüberliegenden, nach außen geöffnete Ausnehmungen in der Bügelverschlussflasche 1 aufgenommen.

Der Bügelring 2.11 bildet ferner eine Aufnahme für die freien Enden des Bügelarmes 2.12 aus, und zwar weist dieser hierzu zwei näherungsweise ringförmige Bügelabschnitte aus, in denen die freien Enden des Bügelarmes 2.12 aufgenommen sind bzw. darin drehbar gelagert sind. Die drehbare Lagerung des Verschlussbügels 2.1 bzw. dessen Bügelring 2.1 und Bügelarm 2.12 erfolgt jeweils um eine näherungsweise senkrecht zur Flaschenlängsachse LA verlaufende Drehachse. Ebenfalls ist der Verschlussstopfen 2.2 am Bügelarm 2.12 um eine senkrecht zur Flaschenlängsachse LA verlaufende Drehachse drehbar gehaltert. Der Verschlussstopfen 2.2 ist vorzugsweise aus einem keramischen Material oder aus einem Kunststoffmaterial hergestellt und weist zur Aufnahme des ringförmig ausgebildeten Dichtungsringes 3 einen entsprechend geformten Nasenabschnitt auf.

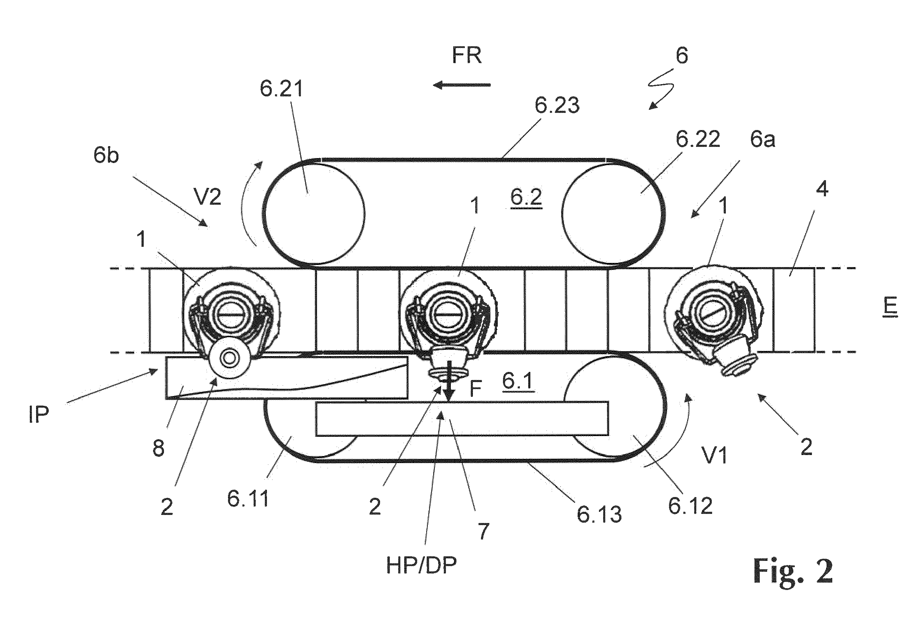

Figur 2 zeigt eine schematische Draufsicht auf die erfindungsgemäße Vorrichtung zur Inspektion der Dichtung 3 eines Bügelverschlusses 2 einer Bügelverschlussflasche 1. Die erfindungsgemäße Vorrichtung weist zumindest eine Transportvorrichtung 4 zum Transport der Bügelverschlussflaschen 1 in einer Transportebene E und entlang zumindest einer Förderrichtung FR und zumindest eine Positioniervorrichtung 6 mit Mittel zum Drehen der Bügelverschlussflasche 1 um deren Flaschenlängsachse LA und Mittel zum Ausrichten des

Bügelverschlusses 2 auf. In den Figuren ist lediglich ein Abschnitt der Transportvorrichtung 4, welche vorzugweise in Form eines Transporteurs realisiert ist, schematisch dargestellt.

Die Bügelverschlussflaschen 1 werden über die Transportvorrichtung 4 der Positioniervorrichtung 6 zugeführt. Hierbei erstreckt sich die Transportvorrichtung 4 bzw. der Transporteur im Bereich der Positioniervorrichtung 6 entlang einer Geraden, und zwar in der Transportebene E, und ist zur Förderung der Bügelverschlussflaschen 1 durch oder entlang der Positioniervorrichtung 6 ausgebildet. Die Flaschenlängsachse LA der Bügelverschlussflaschen 1 verläuft hierbei vorzugsweise senkrecht zur Transportebene E und die Bügelverschlussflaschen 1 erreichen die Positioniervorrichtung 6 in nahezu beliebig verdrehter Ausrichtung der Bügelverschlüsse 2 bezogen auf die Förderrichtung FR.

Die Positioniervorrichtung 6 weist einen Einlaufbereich 6a und einen Auslaufbereich 6b auf, wobei vorzugsweise im Einlaufbereich 6a eine erste Inspektionsvorrichtung 5 vorgesehen ist, mittels der die Drehposition der Bügelverschlussflasche 1 ermittelt wird. Insbesondere wird darüber die Ausrichtung des Bügelverschlusses 2 einer Bügelverschlussflasche 1 bezogen auf die Förderrichtung FR bestimmt. Im Auslassbereich 6b ist eine zweite Inspektionsvorrichtung 9 vorgesehen, welche zur Inspektion der am Verschlusstopfen 2.2 des Bügelverschlusses 2 vorgesehenen Dichtung 3 ausgebildet ist.

Sowohl die erste als auch die zweite Inspektionsvorrichtung 5, 9 umfassen vorzugsweise ein Kamerasystem sowie eine entsprechende Beleuchtung und sind zur Erfassung von Bildaufnahmen, vorzugsweise in digitaler Form vorgesehen. Es versteht sich, dass die Inspektionsvorrichtungen 5, 9 auch durch alternative Erfassungsvorrichtungen gebildet sein können, mittels denen die Drehposition der Bügelverschlussflaschen 1 bzw. die Beschaffenheit der Dichtung 3 ermittelbar ist ohne das hierdurch der Erfindungsgedanke verlassen wird.

Vorzugsweise sind die erste und zweite Inspektionsvorrichtung 5, 9 über der Transportvorrichtung 4 bzw. dem Transporteur angeordnet, und zwar derart, dass die Erfassungsrichtung der jeweiligen Inspektionsvorrichtung 5, 9 in Flaschenlängsachse LA oder im Wesentlichen parallel zur Flaschenlängsachse LA bzw. senkrecht zur Aufnahmeebene verläuft.

Die vorzugsweise über die Transportvorrichtung 4 bzw. dem Transporteur einzeln der Positioniervorrichtung 6 zugeführten Bügelverschlussflaschen 1 werden über die Mittel zum Drehen der Bügelverschlussflasche 1 um ihre Flaschenlängsachse LA im oder gegen den Uhrzeigersinn gedreht und somit in eine vorgegebene Drehposition gebracht.

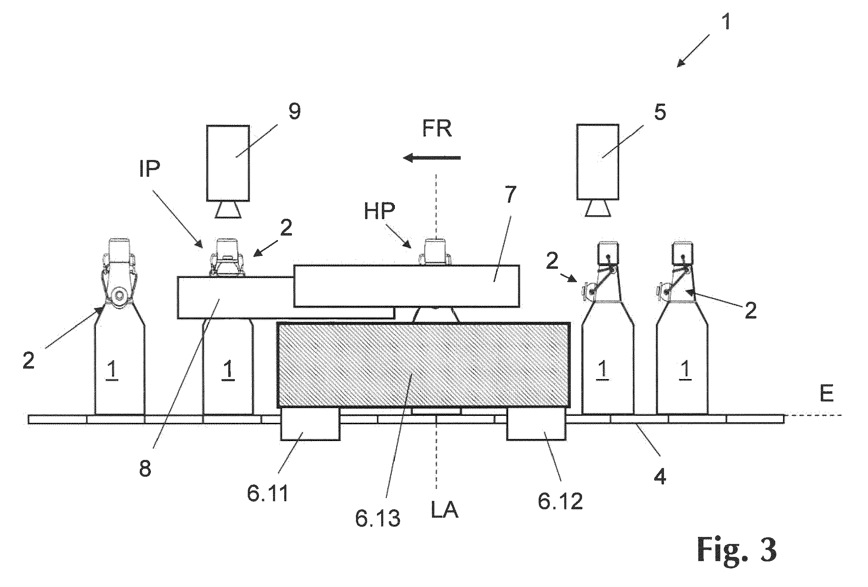

In der in Figur 2 und 3 dargestellten Ausführungsvariante sind die Mittel zum Drehen der Bügelverschlussflaschen 1 um deren Flaschenlängsachse LA durch zwei entlang der Transportvorrichtung 4 gegenüberliegend angeordnete Riemenstationen 6.1, 6.2 gebildet, und zwar einer ersten und zweiten Riemenstation 6.1, 6.2. Jede der Riemenstationen 6.1, 6.2 weist zumindest eine Antriebsmotoreinheit 6.11, 6.21 und zumindest eine der jeweiligen Antriebsmotoreinheit 6.11, 6.21 gegenüberliegende Umlenkrolleneinheit 6.21, 6.22 auf, wobei zwischen einer Antriebsmotoreinheit 6.11, 6.21 und einer Umlenkrolleneinheit 6.21, 6.22 ein Antriebsriemen 6.31, 6.32 gespannt ist. Der jeweilige Antriebsriemen 6.31, 6.32 einer Riemenstation 6.1, 6.2 bildet eine vorzugsweise ebene, senkrecht zur Transportebene E verlaufende Antriebsfläche aus, welche sich parallel zur Förderrichtung FR erstreckt. Die Antriebsmotoreneinheiten 6.11, 6.21 können entweder als Schrittmotoreinheiten oder als Servomotoreinheiten ausgebildet sein.

Die beiden gegenüberliegenden Riemenstationen 6.1, 6.2 sind hierbei derart beabstandet zueinander angeordnet, dass diese die in der Positioniervorrichtung 6 befindliche Bügelverschlussflasche 1 im Bereich des Flaschenkörpers 1.3 einklemmen und in Förderrichtung FR mitführen. Vorzugsweise ist die Positioniervorrichtung 6 zur Verarbeitung von Bügelverschlussflaschen 1 mit einem Durchmesser zwischen 60 mm und 80 mm, vorzugsweise 65 mm und 70 mm ausgebildet. Es versteht sich das die erfindungsgemäße Vorrichtung zur Inspektion von Bügelverschlussflaschen 1 keinesfalls auf die Verarbeitung von Bügelverschlussflaschen 1 mit den genannten Durchmessern beschränkt ist, vielmehr ist auch die Verarbeitung von kleineren oder größeren Flaschendurchmessern möglich.

Die Antriebsgeschwindigkeiten V1, V2 der ersten und zweiten Riemenstation 6.1, 6.2 und sind vorzugsweise getrennt voneinander regelbar, und zwar weist die erste Riemenstation 6.1 eine erste Antriebsgeschwindigkeit V1 und die zweite Riemenstation 6.2 eine zweite Antriebsgeschwindigkeit V2 auf. Durch Regelung der Differenzgeschwindigkeit zwischen der ersten und zweiten Antriebsgeschwindigkeit V1, V2 der ersten bzw. zweiten Riemenstation 6.1, 6.2 für eine vorgegebene Zeitdauer ist ein gesteuertes Verdrehen der Bügelverschlussflasche 1 um ihre Flaschenlängsachse LA in an sich bekannter Weise möglich. Zugleich wird auch die Bügelverschlussflasche 1 auch in Förderrichtung FR gefördert.

Überschreitet die erste Antriebsgeschwindigkeit V1 beispielsweise die zweite Antriebsgeschwindigkeit V2, so wird die Bügelverschlussflasche 1 während der Förderung in Förderrichtung FR im Uhrzeigersinn um ihre Flaschenlängsachse LA gedreht. Überschreitet hingegen die zweite Antriebsgeschwindigkeit V2 die erste Antriebsgeschwindigkeit V1, so erfolgt eine Drehung der Bügelverschlussflasche 1 im Gegenuhrzeigersinn während der Förderung in Förderrichtung FR. Durch entsprechende Regelung der ersten und zweiten Riemenstation 6.1, 6.2 kann die in der Positionierungsvorrichtung 6 befindliche Bügelverschlussflasche 1 während der Beförderung mittels der Transportvorrichtung 4 in Förderrichtung FR in eine vorgegebene Drehposition positioniert werden.

Alternativ können die erste und zweite Antriebsgeschwindigkeit V1, V2 denselben Betrag aufweisen, jedoch gegenläufig zueinander orientiert sein. Bei dieser Realisierung erfolgt die Drehung der Bügelverschlussflasche 1 um Ihre Flaschenlängsachse LA im Stillstand, d.h. ohne Förderung in Förderrichtung FR. Durch entsprechende Wahl der Orientierung der gegenläufigen ersten und zweiten Antriebsgeschwindigkeit V1, V2 in oder gegen die Förderrichtung FR ist wiederum ein Drehen der Bügelverschlussflasche 1 im Uhrzeigersinn oder im Gegenuhrzeigersinn im Stillstand möglich.

Beispielsweise wird die Bügelverschlussflasche 1 in eine Drehposition DP gedreht, in der die Bügelverschlussflasche 1 derart in der Positionsvorrichtung 6 aufgenommen ist, dass der Bügelverschluss 2 senkrecht zur Förderrichtung FR in Richtung der ersten Riemenstation 6.1 oder alternativ in Richtung der zweiten Riemenstation 6.2 orientiert ist. In der Drehposition DP ist damit der Bügelverschluss 2 in Draufsicht näherungsweise rechtwinklig zur Förderrichtung FR ausgerichtet. Hierbei ist sowohl eine Ausrichtung in Richtung einer ausgewählten Riemenstation 6.1, 6.2 oder auch in Richtung der ersten und zweiten Riemenstation 6.1, 6.2 denkbar, und zwar abhängig von der mittels der ersten Inspektionsvorrichtung 5 erfassten Drehposition der Bügelverschlussflasche 1. Beispielsweise kann der Bügelverschluss 2 jeweils auf diejenige Riemenstation 6.1, 6.2 ausgerichtet werden, deren Drehung um die Flaschenlängsachse LA den geringsten Drehwinkel erfordert.

Erfindungsgemäß weist die Vorrichtung zur Inspektion von Dichtungen 3 eines Bügelverschlusses 2 von Bügelverschlussflaschen 1 eine Magnetisierungseinrichtung 7 auf, die zumindest ein Mittel zum Ausrichten des Bügelverschlusses 2 bildet. Die Magnetisierungseinrichtung 7 kann entweder durch einen Permanentmagneten oder einen Elektromagneten oder eine Kombination aus beiden gebildet sein. Die Magnetisierungseinrichtung 7 ist vorzugsweise zur Erzeugung einer Magnetkraft F von 1000 N bis zu 3000 N eingerichtet. Die Magnetkraft F wirkt zumindest in Richtung der an dieser vorbeigeförderten Bügelverschlussflaschen 1, vorzugsweise auf den Bereich des Flaschenhalses 1.2.

Die Magnetisierungseinrichtung 7 erstreckt sich zumindest abschnittweise entlang der Positioniervorrichtung 6, und zwar vorzugsweise parallel zur Förderrichtung FR bzw. Förderebene E. Damit wird die in der vorgegebenen Drehposition DP befindliche Bügelverschlussflasche 1 mit einem durch die Magnetisierungseinrichtung 7 erzeugten Magnetfeld mit einer Magnetkraft F beaufschlagt, welche vorzugsweise auf den Bügelverschluss 2 der Bügelverschlussflasche 1 gerichtet ist. Der Bügelverschluss 2 ist in der Drehposition DP in Richtung der Magnetisierungseinrichtung 7 orientiert und kann in dieser Positionierung bei Beaufschlagen mit der Magnetkraft F von der Bügelverschlussflasche 1 abgehoben werden. Die Bügelverschlussflasche 1 wird hierbei weiterhin durch die Positioniervorrichtung 6, insbesondere die erste und zweite Riemenstation 6.1, 6.2 im Bereich des Flaschenkörpers 1.1 gehalten.

Die durch die Magnetisierungseinrichtung 7 erzeugte Magnetkraft F wirkt hierbei näherungsweise senkrecht zur Flaschenlängsachse LA bzw. zumindest in einer die Flaschenlängsachse LA aufnehmenden Ebene auf den Verschlussbügel 2.1 ein. Der im Bereich des Flaschenhalses 1.2 der Bügelverschlussflasche 1 anliegende Bügelverschluss 2 wird durch diese Magnetkraft F vom Flaschenhals 1.2 abgehoben und in Richtung der Magnetisierungseinrichtung 7 ausgelenkt. Aufgrund der bestehenden Magnetkraft F wird der Bügelverschluss 2 in einer näherungsweise senkrecht zur Flaschenlängsachse LA verlaufenden Halteposition HP gehalten. Insbesondere wird der aus Metall hergestellte Verschlussbügel 2.1 nebst Verschlussstopfen 2.2 vom Flaschenkörper 1.1 abgehoben und durch die von der Magnetisierungseinrichtung 7 erzeugten Magnetkraft F in dieser Halteposition HP gehalten. In einer bevorzugten Ausführungsvariante ist die Magnetisierungsvorrichtung 7 entlang und oberhalb der ersten Riemenstation 6.1 angeordnet. Diese befindet sich näherungsweise auf dem Höhenniveau der Bügelverschlüsse 2 des über die Transporteinrichtung 4 geförderten Bügelverschlussflaschen 1. Alternativ oder zusätzlich kann die Magnetisierungsvorrichtung 7 entlang der zweiten Riemenstation 6.2 oder zwei gegenüberliegende Magnetisierungseinrichtungen (nicht in den Figuren dargestellt) vorgesehen sein.

In Förderrichtung FR ist im Auslaufbereich 6b der Positioniervorrichtung 6 eine Führungseinrichtung 8 zur Führung des Verschlussstopfens 2.2 des Bügelverschlusses 2 vorgesehen, welche beispielsweise zumindest abschnittsweise mit der Magnetisierungseinrichtung 7 überlappt. Die Führungseinrichtung 8 ist zur Zwangsführung des Verschlussstopfens 2.2 des mittels der erzeugten Magnetkraft F angehoben und in der Halteposition HP befindlichen Verschlussstopfens 2.2 vorgesehen. Hierbei wird der Halteposition HP befindlichen Verschlussstopfens 2.2 von dem freien Ende der Führungseinrichtung 8 aufgenommen und in der durch die Führungseinrichtung 8 vorgegebenen Führungsbahn während der Förderung entlang der Förderrichtung FR geführt. In einer Ausführungsvariante ist die Führungseinrichtung 8 der Magnetisierungseinrichtung 7 nachgeschaltet, d.h. weist keine Überlappung zu dieser auf.

Der Verschlussstopfen 2.2 weist zunächst in der Halteposition HP mit seinem die Dichtung 3 aufnehmenden Nasenabschnitt 2.2' in Richtung der Transportvorrichtung 4. Zur Inspektion dessen ist jedoch eine Drehung des Verschlussstopfens 2.2 um vorzugsweise 180° um eine parallel zur Flaschenlängsachse LA verlaufenden Drehachse erforderlich. Hierzu wird der Verschlussstopfen 2.2 mit seiner der Dichtung 3 gegenüberliegenden flachen Oberseite 2.2" von der Führungseinrichtung 8, welche vorzugsweise in Form einer Wendeleiste realisiert ist, aufgenommen und mit der Führungsbahn zur Anlage gebracht. Die in Form einer Wendeleiste ausgebildete Führungseinrichtung 8 führt die flache Oberseite 2.2" des Verschlussstopfens 2.2 entlang in Förderrichtung FR verlaufenden Wendebahn, so dass eine Drehung dessen um einen vorgegebenen Winkelbetrag, vorzugsweise zwischen 75° und 210° bewirkt wird. Mittels der Wendeleiste wird der mit seiner Dichtung 3 nach unten, d.h. in Richtung der Transportvorrichtung 4 weisende Verschlussstopfen 2.2 während der Förderung entlang der Positioniervorrichtung 6 im ausgehend von der Halteposition HP um beispielsweise 180 Grad gedreht wird und damit seine Inspektionsposition IP erreicht, in welcher die Dichtung 3 des Verschlussstopfens 2.2 vertikal nach oben weist. Die Inspektionsposition IP befindet sich vorzugsweise im Auslaufbereich 2b der Positioniervorrichtung 6. Dabei liegt der Verschlussstopfen 2.2 weiterhin mit seiner flachen Oberseite 2.2' des Verschlussstopfens 2.2 auf der der als Wendeleiste ausgebildeten Führungseinrichtung 8 auf. In dieser Inspektionsposition IP wird von der Dichtung 3 mittels der zweiten Inspektionsvorrichtung 9 eine Bildaufnahme erzeugt und zur Untersuchung der Dichtung 3 auf Beschädigungen, insbesondere das Vorliegen von Rissen ausgewertet.

In einer vorteilhaften Ausführungsvariante kann die Wendeleiste ausgebildete Führungseinrichtung 8 mehrere magnetische Elemente aufweisen, die näherungsweise gleichmäßig entlang der Wendeleiste in Förderrichtung FR verteilt sind. Vorzugsweise sind diese in die Wendeleiste integriert, zumindest jedoch auf der Seite vorgesehen, die der zur Führung der Oberseite 2.2' des Verschlussstopfens 2.2 vorgesehen Seite der Wendeleiste gegenüberliegt. Damit wird eine verbesserte Führung des Verschlusstopfens 2.2 über die Wendeleiste erreicht. In dieser Ausführungsvariante ist die Führungseinrichtung 8 der Magnetisierungseinrichtung 7 nachgeschaltet, d.h. weist keine Überlappung zu dieser auf. Auch kann noch eine bügelartig ausgebildete Anschlagvorrichtung zwischen der Führungseinrichtung 8 und der Magnetisierungseinrichtung 7 vorgesehen sein, welche eine obere, leicht schräg zur Förderrichtung FR verlaufende Führung für den von der Flasche 1 angehobenen Bügelverschluss 2 bildet.

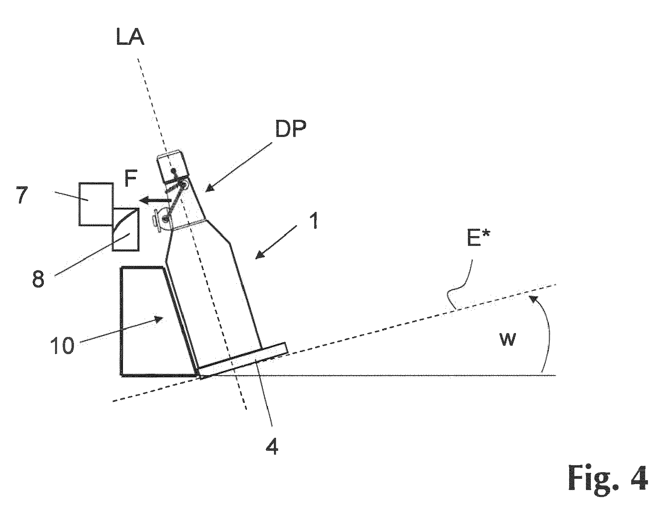

In einer weiteren Ausführungsvariante der Erfindung sind die Mittel zum Drehen der Bügelverschlussflasche 1 um ihre Flaschenlängsachse LA der Positioniervorrichtung 6 durch eine schräge Anlagefläche 10 und einer zugeordneten zumindest abschnittweise schief verlaufenden Transportebene E* der Transportvorrichtung 4 realisiert. Figur 4 zeigt eine schematische Prinzipdarstellung der alternativen Ausführungsvariante der Mittel zum Drehen der Bügelverschlussflasche 1. Im Bereich der Positioniervorrichtung 6 bzw. der sich entlang der Transportvorrichtung 4 erstreckenden schrägen Anlagefläche 10 schließt die schiefe Transportebene E* der Transportvorrichtung 4 mit der Horizontalen einen spitzen Winkel w ein, vorzugsweise zwischen 10° und 45°. Insbesondere schließen die schräge Anlagefläche 10 und die schiefe Transportebene E* einen rechten Winkel ein.

Die Riemenstationen 6.1, 6.2 sind in der alternativen Ausführungsvariante durch die zumindest eine schräge Anlagefläche 10 ersetzt. Im Einlaufbereich 6a der Positioniervorrichtung 6 wird der Anstellwinkel der Transportebene E der Transportvorrichtung 4 verändert, und zwar nimmt dieser zu bis er einen vorgegebenen spitzen Winkel w erreicht und spätestens dann zur Anlage gegen die schräge Anlagefläche gelangt. Während des Transportes entlang der schiefe Transportebene E* der Transportvorrichtung 4 liegt die Bügelverschlussflasche 1 mit ihrem Flaschenkörper 1.1 an der schrägen Anlagefläche 10 an und aufgrund der bestehenden Schwerkraft wird eine Drehung der Bügelverschlussflasche 1 um ihre Flaschenlängsachse LA derart bewirkt, dass der Bügelverschluss 2 sich senkrecht zur Förderrichtung FR und in Richtung der schrägen Anlagefläche 10 ausrichtet und damit die zur Aufnahme über die Magnetisierungseinrichtung 7 erforderliche Halteposition HP einnimmt. Analog zur Riemenstation 6.1 erfolgt durch die schräge Anlagefläche 10 und die schiefe Transportebene E* damit eine Ausrichtung des Bügelverschlusses 2 in eine in Draufsicht vertikal zur Flaschenlängsachse LA verlaufende Halteposition HP. Die Kombination aus schräger Anlagefläche 10 und schiefer Transportebene E* ist besonders kostengünstig und technisch einfach zu realisierbar.

Nach Erreichen der Halteposition HP werden die derart ausgerichteten Bügelverschlussflaschen 1 wiederum der Magnetisierungseinrichtung 7 zugeführt und durch die auf den Verschlussbügel 2 einwirkende Magnetkraft F vom Flaschenkörper 1.1 abgehoben und derart ausgerichtet, dass diese vorzugsweise seitlich von dem Flaschenkörper 1.1 in Richtung der Magnetisierungseinrichtung 7 wegstehen und mittels der überlappend mit der Magnetisierungseinrichtung 7 ausgebildeten Führungseinrichtung 8 aufgenommen werden können. Über die in Form einer Wendeleiste ausgebildete Führungseinrichtung 8 wird ausgehend von der Halteposition HP der Verschlussstopfen 2.2 des Bügelverschlusses 2 wiederum derart gedreht, dass der die Dichtung 3 aufweisende Nasenabschnitt des Verschlussstopfen 2.2 in Richtung der zweiten Inspektionsvorrichtung 9 ausgerichtet ist, d. h. vorzugsweise nach oben in Richtung der Flaschenlängsachse LA weist. Nach Erreichen dieser Inspektionsposition IP wird eine Bildaufnahme der Dichtung 3 in an sich bekannter Weise erzeugt und dies ausgewertet.

In einer weiteren nicht in den Figuren dargestellten Ausführungsvariante ist die in Figur 2 dargestellte Positioniervorrichtung 6 durch vier Riemenstationen gebildet, wobei jeweils zwei einander gegenüberliegend angeordnet und zusammenwirkende Riemenstationen ein Riemenstationspaar bilden. Die sich ergebenden zwei Riemenstationspaare sind hintereinander entlang der Förderrichtung FR angeordnet, wobei das erste Riemenstationspaar zur Ausrichtung der Bügelverschlussflasche 1 in die Drehposition DP mit einem in Draufsicht senkrecht zur Förderrichtung FR orientierten Bügelverschluss 2. Die Antriebsgeschwindigkeiten V1, V2 der Riemenstationen des ersten Riemenstationspaares werden abhängig von der über die erste Inspektionsvorrichtung 5 ermittelten aktuellen Drehposition gesteuert, wobei vorzugsweise die Antriebsgeschwindigkeiten V1, V2 gegenläufig zueinander orientiert sind, jedoch denselben Betrag aufweisen, so dass eine Drehung der Bügelverschlussflasche 1 ohne eine Bewegung entlang der Förderrichtung FR, d.h. im quasi Stillstand erfolgt. Das zweite Riemenstationspaar schließt sich in Förderrichtung FR übergangslos an das erste Riemenstationspaar an, so dass ein die in der gewünschten Drehposition DP befindliche Bügelverschlussflasche 1 an das zweite Riemenstationspaar übergeben wird und von diesem seitlich gestützt entlang der Förderrichtung FR gefördert wird. Hierbei wird das zweite Riemenstationspaar synchron zur Transportvorrichtung 4 betrieben. Die Anordnung der Magnetisierungsvorrichtung 7 und der Führungseinrichtung 8 erfolgt analog zuvor beschrieben entlang des zweiten Riemenstationspaares. Der Bügelverschluss 2 wird über die Magnetisierungsvorrichtung 7 während der Führung mittels des zweiten Riemenstationspaares entlang der Förderrichtung FR angehoben, vorzugsweise in die Horizontale und läuft in die als Wendeleiste ausgebildete Führungseinrichtung 8 ein, über der Verschlussstopfen 2.2 gedreht wird und in die vorgegebene Inspektionsposition IP gebracht wird. Nach erfolgter Inspektion durch die zweite Inspektionsvorrichtung 9 läuft die Bügelverschlussflasche 1 aus der Positioniervorrichtung 6 bzw. aus dem zweiten Riemenstationspaar aus. Vorteilhaft kann bei dieser zweistufigen Realisierung der Positioniervorrichtung 6 die Flaschenlücke am Einlauf reduziert werden und jeweils zwei Bügelverschlussflaschen 1 bearbeitet werden. Dadurch wird die Inspektionsgeschwindigkeit deutlich erhöht.

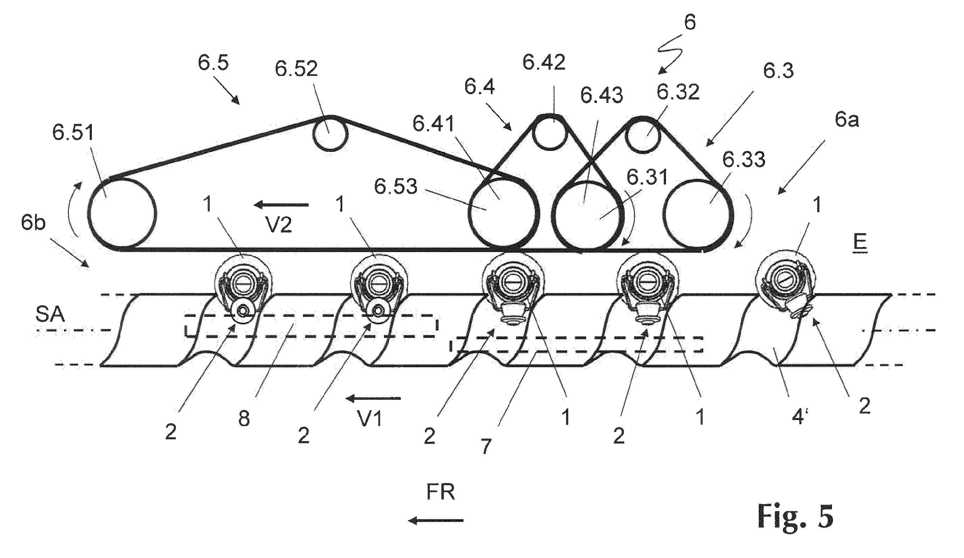

Figur 5 zeigt eine schematische Draufsicht auf eine alternative Ausführungsvariante der erfindungsgemäßen Vorrichtung zur Inspektion der Dichtung 3 eines Bügelverschlusses 2 einer Bügelverschlussflasche 1. Die in Figur 2 vorgesehene Transportvorrichtung 4 zum Transport der Bügelverschlussflaschen 1 in einer Transportebene E und entlang zumindest einer Förderrichtung FR weist in vorliegender Ausführungsvariante zumindest eine

Förderschnecke 4' auf, welche vorzugsweise eine progressive Steigung besitzt und um eine Schneckenachse SA rotiert, die parallel zur Förderrichtung FR orientiert ist. Diese ersetzt somit die untere Riemenstation 6.1 der in Figur 2 dargestellten Positioniervorrichtung 6, d.h. die Förderschnecke 4' ist somit zur Positionierung der Bügelverschlussflasche 1 um die Flaschenlängsachse LA und zur Förderung der Bügelverschlussflasche 1 in Förderrichtung FR vorgesehen.

Die vorzugsweise unmittelbar aneinander anschließenden Bügelverschlussflaschen 1 werden dem freien Ende der Förderschnecke 4' in an sich bekannter Weise zugeführt, von der Förderschnecke 4' aufgenommen und über diese vereinzelt. Insbesondere bei Verwendung einer Förderschnecke 4' mit einer progressiven Steigung können die Bügelverschlussflaschen 1 in Förderrichtung FR derart vereinzelt werden, dass deren Förderabstand vom Einlauf in die Förderschnecke 4' in Förderrichtung FR auf einen vorgegebenen Förderabstand zunimmt und dann bei der weiteren Verarbeitung der Bügelverschlussflaschen 1 beibehalten wird.

Die die Transportvorrichtung 4 bildende Förderschnecke 4' bildet auch einen Teil der Positioniervorrichtung 6 aus. Die Positioniervorrichtung 6 umfasst darüber hinaus mehrere Riemenstationen 6.3, 6.4, 6.5, die entlang der in Förderrichtung FR hintereinander angeordnet sind und eine zumindest abschnittsweise geschlossene, geradlinige Anlage-und Förderfläche ausbilden. Die Bügelverschlussflaschen 1 werden damit zwischen der Anlage- und Förderfläche des Riemenstationen 6.3, 6.4, 6.5 und der Förderschnecke 4' aufgenommen und in Förderrichtung FR bewegt.

Bei der in Figur 5 dargestellten Ausführungsvariante ist eine dritte Riemenstation 6.3, eine vierte Riemenstation 6.4 und eine fünfte Riemenstation 6.5 vorgesehen. Die dritte Riemenstation 6.3 weist zumindest eine Antriebsmotoreinheit 6.31 und zwei weitere Umlenkrolleneinheiten 6.32, 6.33 auf. Analog hierzu weisen die vierte und fünfte Riemenstation 6.4, 6.5 jeweils zumindest eine Antriebsmotoreinheit 6.41, 6.51 und zwei weitere Umlenkrolleneinheiten 6.42, 6.43 bzw. 6.52, 6.53 auf. Die dritte und fünfte Riemenstationen 6.3, 6.5 weisen vorzugsweise zwei parallele Riemen auf, wohingegen die vierte Riemenstation 6.4 lediglich einen, vorzugsweise breiteren Riemen umfasst. Wie in Figur 5 dargestellt überlappen die aneinander anschließenden freien Endabschnitte der dritten bis fünften Riemenstationen 6.3 - 6.5, so dass ein nahtloser Übergang zwischen den Anlage- und Förderflächen der aneinander anschließenden Stationen 6.3 - 6.5 gewährleistet ist.

Die dritte Riemenstation 6.3 ist im Einlaufbereich 6a angeordnet und nimmt die über die Förderschnecke 4' zugeführten und bereits vereinzelten Bügelverschlussflaschen 1 gemeinsam mit der Förderschnecke 4' auf. Der dritten Riemenstation 6.3 ist ferner die erste Inspektionsvorrichtung 5 zur Erkennung der Lage und Position des Bügelverschlusses 2 zugeordnet. An die dritte Riemenstation 6.3 schließt sich in Förderrichtung FR die vierte Riemenstation 6.4 an, welche zumindest abschnittsweise mit der dritten Riemenstation 6.3 überlappt. Die vierte Riemenstation 6.4 ist zur Drehung der Bügelverschlussflaschen 1 um ihre Flaschenlängsachse FLA und damit Ausrichtung des Bügelverschlusses 2 in die Drehposition DP mit einem in Draufsicht senkrecht zur Förderrichtung FR orientierten Bügelverschluss 2 vorgesehen. Hierzu sind - wie zuvor bereits ausgeführt - die Geschwindigkeiten und/oder Drehrichtungen der Riemenstationen 6.3, 6.4, 6.5 unabhängig voneinander steuerbar. An die vierte Riemenstation 6.4 schließt die fünfte Riemenstation 6.5 an, die teilweise mit der vierten Riemenstation 6.4 überlappt und die zur Stabilisierung der Bügelverschlussflaschen 1 nach dem Ausrichten der Bügelverschlüsse 2 mittels der in Figur 5 mittels strichliert gezeichneter Linien angedeuteten Magnetisierungseinrichtung 7 und der Führungseinrichtung 8 vorgesehen ist. Die durch die Förderschnecke 4' bewirkte Geschwindigkeit V1 der Bügelverschlussflaschen 1 entspricht hierbei im Wesentlichen der durch die fünfte Riemenstation 6.5 erzeugten Geschwindigkeit V2. Analog zu den zuvor beschriebenen Ausführungsvarianten ist im Auslaubereich 6b eine in Figur 5 nicht dargestellte zweite Inspektionsvorrichtung 9 vorgesehen, welche zur Inspektion der am Verschlusstopfen 2.2 des Bügelverschlusses 2 vorgesehenen Dichtung 3 ausgebildet ist. Auch hier ist die Führungseinrichtung 8 der Magnetisierungseinrichtung 7 nachgeschaltet.

In einer Abwandlung der in Figur 5 dargestellten Ausführungsvariante ist die Förderschnecke 4' durch eine analoge Anordnung aus drei Riemenstationen ersetzt, d.h. die Anordnung der dritten bis fünften Riemenstationen 6.3, 6.4, 6.5 zur Förderrichtung FR nochmals gespiegelt vorgesehen, so dass sich wiederum jeweils ein näherungsweise baugleiches Riemenstationspaar gegenüberliegt. Die Bügelverschlussflaschen 1 werden mittels der Riemenstationspaare beim Fördern in Förderrichtung FR auch um ihre Flaschenlängsachse LA ausgerichtet, wodurch der Verarbeitungsabstand zwischen den Flaschen 1 verkürzt werden kann. Vorteilhaft kann hierdurch die Durchsatzrate deutlich erhöht, zumindest jedoch verdoppelt werden.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Bügelverschlussflasche
- 1.1: Flaschenkörper
- 1.2: Flaschenhals
- 1.3: Flaschenmündung
- 2: Bügelverschluss
- 2.1: Verschlussbügel
- 2.11: Bügelring
- 2.12: Bügelarm
- 2.2: Verschlussstopfen
- 2.2': Nasenabschnitt
- 2.2": flache Oberseite
- 3: Dichtung
- 4: Transportvorrichtung
- 4': Förderschnecke
- 5: erste Inspektionsvorrichtung
- 6: Positioniervorrichtung
- 6a: Einlaufbereich
- 6b: Auslaufbereich
- 6.1: erste Riemenstation
- 6.11: erste Antriebsmotoreinheit
- 6.12: erste Umlenkrolleneinheit
- 6.13: erster Antriebsriemen
- 6.2: zweite Riemenstation
- 6.21: zweite Antriebsmotoreinheit
- 6.22: zweite Umlenkrolleneinheit
- 6.23: zweiter Antriebsriemen
- 6.3: dritte Riemenstation
- 6.31: Antriebsmotoreinheit
- 6.32, 6.33: Umlenkrolleneinheiten
- 6.4: vierte Riemenstation
- 6.41: Antriebsmotoreinheit
- 6.42, 6.43: Umlenkrolleneinheiten
- 6.5: fünfte Riemenstation
- 6.51: Antriebsmotoreinheit
- 6.52, 6.53: Umlenkrolleneinheiten
- 7: Magnetisiereinrichtung
- 8: Führungseinrichtung
- 9: zweite Inspektionsvorrichtung
- 10: schräge Anschlagfläche

- DP: Drehposition
- E: Transportebene
- E*: schiefe Transportebene
- F: Magnetkraft
- FR: Förderrichtung
- HP: Halteposition
- IP: Inspektionsposition
- LA: Flaschenlängsachse
- V1: erste Geschwindigkeit
- V2: zweite Geschwindigkeit
- SA: Schneckenachse

## Patentansprüche

1. Vorrichtung zur Inspektion von Dichtungen (3) von Bügelverschlüssen (2) von Bügelverschlussflaschen (1) umfassend eine Transportvorrichtung (4) zum Transport der Bügelverschlussflaschen (1) in zumindest einer Förderrichtung (FR), zumindest einer Inspektionsvorrichtung (9) zur Inspektion der an einem Verschlusstopfen (2.2) des Bügelverschlusses (2) vorgesehenen Dichtung (2) und zumindest eine Positioniervorrichtung (6) mit Mittel zum Drehen der Bügelverschlussflasche (1) um deren Flaschenlängsachse (LA) und Mittel zum Ausrichten des Bügelverschlusses (2), **dadurch gekennzeichnet, dass** die Mittel zum Ausrichten des Bügelverschlusses (2) zumindest eine Magnetisierungseinrichtung (7) aufweisen, die zur Erzeugung einer auf den Bügelverschluss (2) der Bügelverschlussflasche (1) einwirkenden Magnetkraft (F) ausgebildet ist.

2. Vorrichtung nach Anspruch 1, **dadurch gekennzeichnet, dass** die erzeugte Magnetkraft (F) zum Ausrichten des Bügelverschlusses (2) entlang einer näherungsweise senkrecht zur Flaschenlängsachse (LA) verlaufenden Ebene ausgebildet ist.

3. Vorrichtung nach Anspruch 1 oder 2, **dadurch gekennzeichnet, dass** eine Führungseinrichtung (8) zum Drehen des am Bügelverschluss (2) vorgesehenen Verschlusstopfens (2.2) in eine Inspektionsposition (IP) zumindest abschnittsweise überlappend mit der Magnetisierungseinrichtung (7) vorgesehen ist.

4. Vorrichtung nach Anspruch 3, **dadurch gekennzeichnet, dass** die Führungseinrichtung (8) durch eine Wendeleiste gebildet ist, über welche der Verschlussstopfen (2.2) bei Förderung entlang der Förderrichtung (FR) um eine parallel zur Förderrichtung (FR) verlaufende Drehachse gedreht wird und/oder dass die Wendeleiste eine Vielzahl von entlang der Förderrichtung (FR) angeordneter magnetischer Element aufweist.

5. Vorrichtung nach einem der Ansprüche 1 bis 4, **dadurch gekennzeichnet, dass** die Mittel zum Drehen der Bügelverschlussflasche (1) um deren Flaschenlängsachse (LA) durch zwei entlang der Transportvorrichtung (4) angeordnete Riemenstationen (6.1, 6.2) gebildet sind, die einander gegenüber liegen.

6. Vorrichtung nach Anspruch 5, **dadurch gekennzeichnet, dass** die Riemenstationen (6.1, 6.2) jeweils eine Antriebsgeschwindigkeit (V1, V2) aufweisen, die getrennt voneinander regelbar ist.

7. Vorrichtung nach Anspruch 4 oder 5, **dadurch gekennzeichnet, dass** eine Riemenstation (6.1, 6.2) zumindest eine Antriebsmotoreinheit (6.11, 6.21) und zumindest eine Umlenkrolleneinheit (6.12, 6.22) aufweist, zwischen denen zumindest ein Antriebsriemen (6.13, 6.23) gespannt ist.

8. Vorrichtung nach einem der Ansprüche 1 bis 4, **dadurch gekennzeichnet, dass** die Mittel zum Drehen der Bügelverschlussflasche (1) um deren Flaschenlängsachse (LA) durch zumindest eine Riemenstation (6.3, 6.4, 6.5) und eine Förderschnecke (4') gebildet sind, die entlang der Förderrichtung (FR) einander gegenüberliegend angeordnet sind.

9. Vorrichtung nach Anspruch 8, **dadurch gekennzeichnet, dass** zumindest drei Riemenstation (6.3, 6.4, 6.5) entlang der Förderrichtung (FR) und parallel zur Förderschnecke (4') vorgesehen sind, die abschnittsweise überlappen und deren Antriebsgeschwindigkeiten unabhängig voneinander regelbar sind.

10. Vorrichtung nach einem der Ansprüche 1 bis 4, **dadurch gekennzeichnet, dass** die Mittel zum Drehen der Bügelverschlussflasche (1) um deren Flaschenlängsachse (LA) durch eine schräge Anschlagfläche (10) gebildet sind, der ein Abschnitt der Transportvorrichtung (4) mit einer schiefen Transportebene (E*) zugeordnet ist.

11. Vorrichtung nach Anspruch 10, **dadurch gekennzeichnet, dass** die schräge Anlagefläche (10) und die schiefe Transportebene (E*) einen rechten Winkel einschließen.

12. Vorrichtung nach Anspruch 10 oder 11, **dadurch gekennzeichnet, dass** die schiefe Transportebene (E*) der Transportvorrichtung (4) mit der Horizontalen einen spitzen Winkel (w) einschließt, und zwar vorzugsweise zwischen 10° und 45°.

13. Vorrichtung nach einem der Ansprüche 1 bis 12, **dadurch gekennzeichnet, dass** einlaufseitig eine weitere Inspektionsvorrichtung (9) zur Ermittlung der Drehposition der der Positioniervorrichtung (6) zugeführten Bügelverschlussflasche (1) bezogen auf die Förderrichtung (FR) vorgesehen ist und/oder dass auslaufseitig die Inspektionsvorrichtung (9) zur Inspektion der an einem Verschlusstopfen (2.2) des Bügelverschlusses (2) vorgesehenen Dichtung (2) angeordnet ist.

14. Vorrichtung nach einem der Ansprüche 1 bis 13, **dadurch gekennzeichnet, dass** die Magnetisierungseinrichtung (7) durch einen Permanentmagneten oder einen Elektromagneten gebildet ist.

15. Vorrichtung nach einem der Ansprüche 1 bis 14, **dadurch gekennzeichnet, dass** die von der Magnetisierungseinrichtung (7) erzeugte Magnetkraft (F) von 1000N bis zu 3000 N beträgt.
